# FASCICULE DE BREVET EUROPEEN

(11) **EP 1 405 903 B1**
(45) Date de publication et mention de la délivrance du brevet: **14.05.2008**
(21) Numéro de dépôt: 03368094.3
(22) Date de dépôt: 03.10.2003
(51) Int. Cl.: C12H 1/16, C12H 1/22, C22C 9/00

(54) **Procédé de traitement d'un vin à l'aide d'un alliage de cuivre, d'or et d'argent, de mesure de l'aptitude au vieillissement et dispositif pour la mise en oeuvre du procédé**
Verfahren zur Behandlung von Wein mit Hilfe einer Legierung aus Kupfer, Gold und Silber, zur Ermittlung der Eignung zur Reifung und Vorrichtung zur Durchführung des Verfahrens
Process for treatment of wine by aid of an alloy of copper, gold and silver, for measuring its suitability to age and apparatus enabling said process

(30) Priorité: 04.10.2002 FR 0212302
(43) Date de publication de la demande: 07.04.2004
(73) Titulaire: Thomas, Franck, 06110 Juan les Pins (FR); Zanon, Lorenzo, 10200 Champignol lez Mondeville (FR)
(72) Inventeur: Thomas, Franck, 06110 Juan les Pins (FR); Zanon, Lorenzo, 10200 Champignol lez Mondeville (FR)
(74) Mandataire: Schuffenecker, Thierry

(56) Documents cités:
- WO-A-02/064726
- CH-A- 100 237
- DE-A- 19 721 920
- DE-C- 893 332
- GB-A- 2 292 749
- SU-A- 737 447
- DATABASE FSTA [en ligne] INTERNATIONAL FOOD INFORMATION SERVICE (IFIS), FRANFURT/MAIN, DE; AVAKYANTS S P ET AL: "Process for maturing beverages." Database accession no. 81-1-03-h0449 XP002267027 & USSR PATENT 737 447 1980,

## Description

### Domaine technique de l'invention

La présente invention concerne le domaine de l'oenologie et notamment un procédé de vieillissement accéléré d'un vin donné et un dispositif pour la mise en oeuvre du procédé.

### Etat de la technique

L'aptitude au vieillissement est traditionnellement supposée en fonction du millésime des vins, de leurs couleurs, des cépages employés et de la méthode de vinification. Certains vins sont dégustés trop tôt ou trop tard et, bien souvent, l'utilisateur ne les consomme pas à leur apogée.

D'une manière générale, le vieillissement d'un vin suit sa fermentation, laquelle est principalement une opération de réduction du vin. Ensuite, ce dernier est conservée dans une atmosphère ou un emballage anti-oxydant de manière à éviter une oxydation trop brutale - pire des maux pour le vinificateur professionnel - et assurer les condition d'une lente oxydation permettant de conduire le vin à son apogée. Les principaux éléments anti-oxydants utilisés sont basé sur le souffre, à l'état de sulfites ou de sulfure, de manière à permettre au vin de subir l'effet d'une lente oxydation, d'un vieillissement en cave à température constante.

En général, on laisse vieillir le vin durant de nombreuses années en cave de manière à assurer une lente opération d'oxydoréduction et permettre la libération des arômes et par la suite la dégustation du vin à son apogée.

Cette longue période de vieillissement qui est nécessaire est un inconvénient pour les professionnels mais également pour les consommateurs. Les uns comme les autres devront attendre de nombreuses années avant de s'assurer que le vin pourra être dégusté dans les meilleures conditions. Cependant des procédés de vieillissement accélléré sont connus de l'art (DE 893 332 ; SU 737 447).

En outre, cette longue période de vieillissement constitue un obstacle supplémentaire à culture de l'oenologie qui, il faut bien le reconnaître, est une science réservée à quelques initiés et reste particulièrement difficile d'accès pour un consommateur moyen qui ne peut s'en remettre à des indications générales diffusée dans les guides ou a presse spécialisée.

D'une manière générale, il serait souhaitable - aussi bien pour le professionnel que pour le consommateur - de ne pas être contraint d'attendre de nombreuses années avant de pouvoir déguster son vin ou de s'apercevoir que celui-ci est impropre à un vieillissement en cave.

Il est tout également souhaitable de pouvoir disposer d'un outil spécifique à la science de l'oenologie, permettant de constituer un étalon pour l'appréciation du vin et son aptitude au vieillissement.

L'on se propose, avec la présente invention, à démocratiser largement l'accès à la culture de l'oenologie et, plus généralement, à offrir à tout un chacun - aux professionnels de l'oenologie comme au grand public, - un outil particulièrement efficace permettant d'apprécier la qualité de ce breuvage plusieurs fois millénaire.

### Exposé de l'invention

La présente invention a pour but de proposer un procédé destiné à ménager un procédé d'oxydoréduction accéléré du vin d'une manière parfaitement maîtrisé afin d'en assurer un vieillissement organoleptique prédéterminé.

Un autre but de la présente invention consiste à réaliser un dispositif simple et efficace permettant de traiter le vin au moyen d'une opération d'oxydoréduction parfaitement maîtrisée et, par suite, un vieillissement prédéterminé du vin.

Un troisième but de la présente invention consiste à réaliser un étalon de mesure pour l'aptitude au vieillissement d'un vin.

L'invention réalise ces buts au moyen d'un procédé de vieillissement accéléré d'un vin contenu dans un récipient ouvert ou fermé comportant les étapes suivantes :
- mise en contact du vin à traiter avec un élément d'alliage de cuivre, d'or et d'argent présentant une surface et une composition définie de manière à réaliser une opération d'oxydoréduction accélérée et calibrée du vin.

On réalise ainsi une opération d'oxydoréduction parfaitement calibrée, maîtrisée assurant un traitement organoleptique approprié, très proche d'un vieillissement en cave. Cette opération est susceptible de nombreuses applications, dont la détermination de l'aptitude au vieillissement d'un vin prédéterminé ou, tout simplement, la dégustation dans les meilleures conditions d'un vin à fort potentiel.

Dans un mode de réalisation particulier, l'élément d'alliage est composé de 60 à 99.9 pour cent de cuivre, 0.05 à 20 pour cent d'argent et 0.05 à 20 pour cent d'or. De préférence, l'alliage se compose de 95 pour cent de cuivre, de 3 pour cent d'or et de 2 pour cent d'argent.

Dans un mode de réalisation particulier, le cuivre est martelé assurant ainsi le vieillissement maîtrisé dans les meilleures conditions.

L'invention réalise également un dispositif à usage oenologique réalisant un vieillissement accéléré d'un vin donné et néanmoins parfaitement maîtrisé. Le dispositif comporte un élément support neutre sur le plan oxydant et un élément présentant une surface de contact et un pouvoir d'oxydoréduction prédéfini.

Dans un mode de réalisation particulier, l'élément d'alliage est une pastille de forme circulaire et présentant une composition de 60 à 99.9 pour cent de cuivre, 0.05 à 20 pour cent d'argent et 0.05 à 20 pour cent d'or.

De préférence le cuivre est martelé et sa composition est de préférence 95%, la composition de l'argent est 3% et celle de l'or est 2%.

L'invention réalise ainsi notamment un élément de mesure ou un étalon servant à la mesure de l'aptitude au vieillissement d'un vin déterminé

Dans un mode de réalisation spécifique, le dispositif comporte un circuit électronique de mesure du temps de trempe combiné à un circuit avertisseur de manière à accroître la précision de la mesure de l'aptitude au vieillissement.

### Description des dessins

D'autres caractéristiques, but et avantages de l'invention apparaîtront à la lecture de la description et des dessins ci-après. Sur les dessins annexés :
La figure 1 représente un mode de réalisation préféré d'un dispositif pour réaliser le vieillissement accéléré maîtrisé d'un vin, particulièrement simple à réaliser, à destination des vinificateurs ou même des amateurs de vins.
La figure 2 représente une seconde réalisation de l'invention comportant un circuit électronique de mesure du temps de trempe.
La figure 3 est un schéma synoptique du circuit électronique de mesure du temps.

### Description des modes de réalisation préférés

Pour comprendre le fonctionnement du procédé et du dispositif selon l'invention, on rappellera que le vin est, d'une manière générale, composé de trois éléments, à savoir une structure, des arômes et du gras.

Le vieillissement du vin résulte de la maîtrise de l'oxydoréduction du vin, ce que l'on réalise en général dans une cave appropriée présentant des caractéristiques données d'hygrométrie et de température.

On s'est aperçu d'une manière surprenante que l'on pouvait obtenir le même effet de vieillissement - d'une manière accéléré - en mettant le vin en contact avec un élément d'alliage présentant un pouvoir d'oxydo-réduction défini et une surface de contact prédéterminée.

En choisissant judicieusement la surface de contact de l'élément d'alliage avec la composition de cet alliage oxydant, on peut alors réaliser un étalon de mesure de l'aptitude au vieillissement du vin.

Dans le mode de réalisation préféré, on utilise un élément d'alliage comportant trois composants, à savoir le cuivre, l'argent et l'or. Comme on le sait, ces trois composants appartiennent à la même classification selon la classification des éléments de Mendeleiv et possèdent un pouvoir autooxydant propre qui se combine avec celui des autres.

On a découvert que le contact de ces trois composants, notamment lorsqu'il est pris dans une combinaison spécifique, permettait de réaliser un effet sur la composition du vin et de procéder à un vieillissement parfaitement maîtrisé.

Plus spécifiquement, les éléments de cuivre et d'argent vont capter l'élément souffre, à l'état de sulfure ou de sulfide présent dans le vin de manière à provoquer la libération de l'élément souffre et, par conséquent, provoquer la libération des arômes du vin. Les trois éléments de l'alliage agissent de concert, et leurs effets se renforcent mutuellement en assurant la libération des arômes semblable à celle résultant d'un vieillissement du vin en cave.

On va décrire à présent deux modes de réalisation spécifiques du procédé selon l'invention de manière à réaliser des outils parfaitement utiles et efficaces aussi bien pour le vinificateur professionnel et l'oenologue que pour le consommateur.

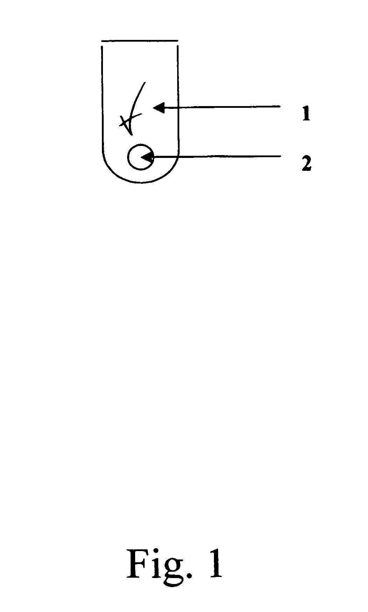

La figure 1 illustre un premier mode de réalisation de l'invention, particulièrement simple et bon marché à réaliser, sous la forme d'un outil permettant le vieillissement accéléré - et cependant parfaitement maîtrisé - du vin en contact avec celui-ci.

Cet outil se présente sous la forme d'une languette 1 à l'intérieur de laquelle est installée un élément 2 d'alliage de surface déterminée et composée d'un alliage de trois métaux tel que le cuivre, l'or et l'argent.

De préférence, l'élément 2 se présente sous la forme d'une pastille circulaire présentant une composition de cuivre entre 60 et 99.9 %, d'argent entre 0.05% et 20% et d'or entre 0.05% et 20%. La pastille présente un diamètre compris entre 3 millimètres et 50 millimètres de diamètre.

La composition précise de la pastille détermine précisément son pouvoir oxydant et le taux de vieillissement accéléré du vin en contact avec celle-ci. En choisissant précisément la surface de contact de l'élément 2, on pourra réaliser ainsi un étalon de vieillissement, par exemple une année de vieillissement par seconde de contact avec la pastille.

De préférence, on adopte la composition précise suivante : 95% de cuivre pour la pastille, 3% pour l'argent et 2% pour l'or. On adoptera pour la pastille un diamètre de 6 millimètres.

De préférence, l'outil présente une forme suffisamment allongée et étroite pour permettre le contact direct avec le vin contenu dans une bouteille.

On notera que l'outil de la figure 1 pourra être réalisé sous une forme quelconque afin d'associer à la partie fonctionnelle de l'outil une esthétique parfaitement dissociable et que, par souci de clarté, l'on n'a pas représenté dans la figure 1. De la même manière, on pourra aisément conférer à la pastille toute forme particulière, parfaitement dissociable de la fonction de cette dernière qui consiste en une surface de contact de l'alliage oxydant avec le vin à traiter.

Comme on le voit, l'outil de la figure 1 permet de réaliser une opération d'oxydoréduction parfaitement maîtrisée qui permet trois appréciations qui ne pouvaient être effectuées sans l'invention :
1) décision pour le producteur de soutirer ou non le vin en cas de phénomène de réduction massive
2) amélioration des conditions de dégustation et de service d'un vin à fort potentiel ;
3) précision de la capacité de garde. On pourra, en choisissant judicieusement la surface de contact de la pastille, adopter l'unité de mesure suivante : dans une quantité de 10 cl de vin, une seconde de contact équivaut à une année de potentiel de vieillissement.

On constate que dans cette troisième application, le dispositif selon l'invention réalise un véritable instrument de mesure, un étalon de l'aptitude au vieillissement du vin.

Grâce à ce premier mode de réalisation préféré - particulièrement simple et bon marché - le consommateur pourra déguster le vin à une étape définie de son vieillissement ou apprécier l'aptitude du même vin à un vieillissement en cave.

Le procédé selon l'invention trouve naturellement vocation à se combiner avec une mesure électronique du temps. En effet, la composition d'alliage étant déterminée, l'effet d'oxydoréduction provoqué sur le vin est fonction du temps de trempe de l'outil dans le verre - ou dans une cuvée quelconque - et ce temps peut être opportunément mesuré par un système électronique associé à l'outil.

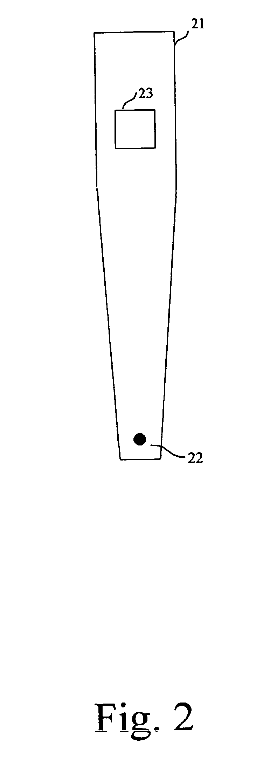

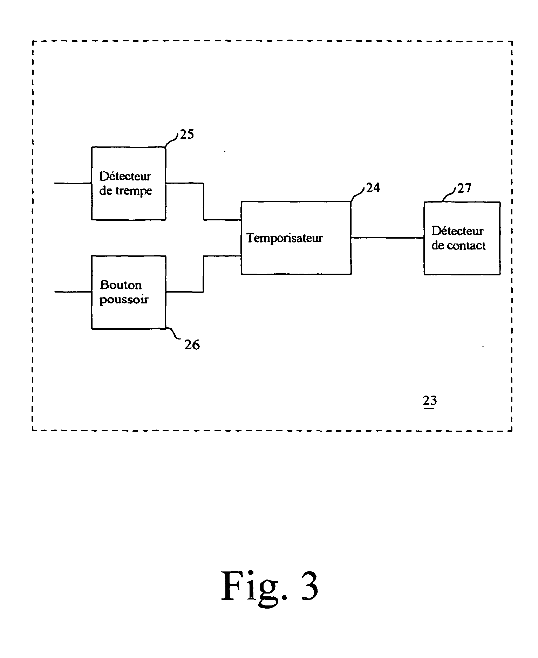

La figure 2 illustre une telle réalisation qui se présente sous la forme d'un outil nouveau - se présentant tel un thermomètre, et que le vinificateur professionnel ou le consommateur pourra tremper dans le verre de vin ou dans la bouteille pour provoquer une opération d'oxydoréduction parfaitement maîtrisé. Dans un mode de réalisation spécifique, l'outil se présente sous la forme d'un élément de support 21, comportant une pastille d'alliage 22 calibrée ainsi qu'un circuit électronique 23 dont le schéma synoptique est donné en figure 3. Le circuit électronique 23 comporte un élément temporisateur 24 - judicieusement calibré en fonction de la surface de la pastille - et un élément détecteur 25 pour la détection de la trempe dans le vin. Le circuit 23 comporte en outre un organe de saisie d'une consigne, telle que par exemple un bouton poussoir 26 situé sur l'outil permettant de générer des impulsions correspondant à autant d'années de vieillissement souhaité, et un élément avertisseur 27, soit sonore soit visuel. L'élément temporisateur pourra être remplacé, selon le cas, par un microprocesseur sous forme de circuit intégré tel que VLSI *(Very Large Scale Integrated)* associé à des éléments mémoires pour la réalisation de fonctions complémentaires indépendantes de l'objet de la présente invention et qui ne seront, par conséquent, pas développées ci-avant.

Dès lors que l'utilisateur - qu'il s'agisse du vinificateur professionnel ou du consommateur - trempe l'outil dans le vin, un décompte du temps est effectué par l'élément de temporisation et, dès le temps adéquat correspondant au nombre d'impulsions générés par l'utilisateur est écoulé, l'élément avertisseur informe l'utilisateur de ce qu'il peut extraire l'outil du récipient contenant le vin.

On obtient ainsi un outil particulièrement efficace pour réaliser un effet de vieillissement du vin qui reste parfaitement maîtrisé. L'association de l'électronique avec la pastille suivant l'invention permet d'obtenir une précision particulièrement remarquable.

Les applications de l'invention, sous ses diverses modes de réalisation sont nombreuses, tant pour les professionnels que pour les consommateurs. Le professionnel pourra tester la qualité du vin et l'aptitude au vieillissement. Le consommateur pourra déguster plus rapidement son vin à son apogée et éviter ainsi de le stocker durant de nombreuses années dans sa cave à vin.

Le procédé, utilisé selon un protocole rigoureux, permet également d'améliorer les conditions d'élevage, d'éviter ou de supprimer certains mercaptans dans le vin. C'est également un moyen d'aide à la décision pour l'oenologue et le vinificateur dans le travail des vins depuis la phase de vinification jusqu'à la mise en bouteille.

## Revendications

1. Procédé de traitement d'un vin contenu dans un récipient ouvert ou fermé et visant à modifier ses propriétés organoleptiques comportant les étapes suivantes :
- mise en contact du vin à traiter avec un élément d'alliage de cuivre, d'or et d'argent présentant une surface et une composition définie de manière à réaliser une opération d'oxydoréduction accélérée et calibrée du vin.

2. Procédé de traitement du vin conformément à la revendication 1 **caractérisé par** un élément d'alliage composé de 60 à 99.9 pour cent de cuivre, 0.05 à 20 pour cent d'argent et 0.05 à 20 pour cent d'or.

3. Procédé de traitement du vin selon la revendication 2 **caractérisé en ce que** ledit élément d'alliage se compose de 95 pour cent de cuivre, de 3 pour cent d'or et de 2 pour cent d'argent.

4. Procédé de traitement du vin selon la revendication 2 **caractérisé en ce que** le cuivre est martelé.

5. Dispositif à usage oenologique permettant de réaliser un vieillissement accéléré d'un vin comportant un élément support (1), neutre sur le plan oxydant, et un élément (2) présentant une surface de contact et un pouvoir d'oxydo réduction prédéterminée, de manière à réaliser une opération de vieillissement accélérée maîtrisée, **caractérisé en ce que** l'élément (2) oxydant se compose dun alliage qui consiste en 60 à 99.9 pour cent de cuivre, 0.05 à 20 pour cent d'argent et 0.05 à 20 pour cent d'or

6. Dispositif selon la revendication 5 **caractérisé en ce que** l'élément oxydant (2) se compose de 95 pour cent de cuivre, de 3 pour cent d'or et de 2 pour cent d'argent.

7. Dispositif selon la revendication 6 **caractérisé en ce que** le cuivre est martelé.

8. Dispositif selon l'une des revendications 5 à 7 **caractérisé en ce qu'**il présente une forme adaptée au goulot d'une bouteille de vin ou à celui d'un tonneau.

9. Dispositif selon l'une des revendications 5 à 8 **caractérisé en ce qu**'il comporte un circuit électronique assurant la mesure d'un temps de trempe prédéterminé de manière à réaliser une opération de vieillissement précise et calibrée.

10. Dispositif selon la revendication 5 **caractérisé en ce qu'**il comporte un instrument de mesure de l'aptitude au vieillissement d'un vin comportant un premier élément support (1), neutre sur le plan oxydant, et un élément (2) présentant une surface de contact et un pouvoir d'oxydo réduction prédéterminée, de manière à réaliser une opération de vieillissement accélérée maîtrisée, **caractérisé en ce que** l'élément (2) oxydant se compose d'un alliage consistant en 60 à 99.9 pour cent de cuivre, 0.05 à 20 pour cent d'argent et 0.05 à 20 pour cent d'or

11. Dispositif selon la revendication 10 **caractérisé en ce que** l'élément oxydant (2) se compose se compose de 95 pour cent de cuivre, de 3 pour cent d'or et de 2 pour cent d'argent.

## Claims

1. A method for processing wine contained in an open or closed container by modifying the wine's organoleptic properties, the method comprising the following steps:
- putting a wine to be processed in contact with a silver, gold, and copper alloy element having a surface and a composition defined in order to carry out accelerated and gauged oxidation-reduction of the wine.

2. A method for processing wine in accordance with claim 1 **characterized by** an alloy element comprising 60 to 99.9 percent copper, 0.05 to 20 percent silver and 0.05 to 20 percent gold.

3. A method for processing wine according to claim 2 **characterized in that** said alloy element is composed of 95 percent of copper, 3 percent of gold and 2 percent of silver.

4. A method for processing wine according to claim 2 **characterized in that** copper is beaten.

5. A device for oenological use allowing to carry out accelerated ageing of a wine comprising a support element (1) that is neutral regarding oxidation, and an element (2) having a predetermined contact surface and a predetermined oxidation-reduction capacity, in order to realize a controlled accelerated ageing operation, **characterized in that** the oxidizing element (2) is comprised of an alloy made up of 60 to 99.9% copper, 0.05 to 20% silver and 0.05 to 20% gold.

6. A device according to claim 5 **characterized in that** the oxidizing element (2) is composed of 95% copper, 3% gold and 2% silver.

7. A device according to claim 6 **characterized in that** copper is beaten.

8. A device according to any one of claims 5 to 7 **characterized in that** the device has a shape adapted to the neck of a wine bottle or to the aperture in a cask.

9. A device according to any one of claims 5 to 8 **characterized in that** the device comprises an electronic circuit for measuring a predetermined soaking time in order to realize a precise and gauged ageing operation.

10. A device according to claim 5 **characterized in that** it comprises an instrument for measuring the capacity of ageing of a wine comprising a first support element (1) that is neutral regarding oxidation, and an element (2) having a predetermined contact surface and a predetermined oxidation-reduction capacity, in order to realize a controlled accelerated ageing operation, **characterized in that** the oxidizing element (2) is comprised of an alloy made up of 60 to 99 9% copper, 0.05 to 20% silver and 0.05 to 20% gold.

11. A device according to claim 10 **characterized in that** the oxidizing element (2) is composed of 95% copper, 3% gold and 2% silver.

## Patentansprüche

1. Verfahren zur Behandlung eines Weins, der in einem offenen oder geschlossenen Behälter enthalten ist, und mit dem Zweck, dessen organoleptische Eigenschaften zu modifizieren, wobei das Verfahren die folgenden Schritte umfasst:
- Inkontaktbringen des zu behandelnden Weins mit einem Kupfer-, Gold- und Silberlegierungselement, das eine Oberfläche und eine Zusammensetzung aufweist, die derart festgelegt sind, dass ein beschleunigter und kalibrierter Redoxreaktionsvorgang des Weins erzielt wird.

2. Verfahren zur Behandlung des Weins nach Anspruch 1, **dadurch gekennzeichnet, dass** ein Legierungselement aus 60 bis 99,9 Prozent Kupfer, 0,05 bis 20 Prozent Silber und 0,05 bis 20 Prozent Gold besteht.

3. Verfahren zur Behandlung des Weins nach Anspruch 2, **dadurch gekennzeichnet, dass** das Legierungselement aus 95 Prozent Kupfer, 3 Prozent Gold und 2 Prozent Silber besteht.

4. Verfahren zur Behandlung des Weins nach Anspruch 2, **dadurch gekennzeichnet, dass** das Kupfer gehämmert ist.

5. Vorrichtung zur önologischen Anwendung, die das Erzielen einer beschleunigten Alterung des Weins ermöglicht und die ein Halteelement (1), das in der Oxidationsebene neutral ist, und ein Element (2), das eine Kontaktfläche und ein vorherbestimmtes Redoxreaktionsvermögen aufweist, umfasst, so dass ein beherrschter beschleunigter Alterungsvorgang erzielt wird, **dadurch gekennzeichnet, dass** das Oxidationselement (2) aus einer Legierung besteht, die sich aus 60 bis 99,9 Prozent Kupfer, 0,05 bis 20 Prozent Silber und 0,05 bis 20 Prozent Gold zusammensetzt.

6. Vorrichtung nach Anspruch 5, **dadurch gekennzeichnet, dass** das Oxidationselement (2) aus 95 Prozent Kupfer, 3 Prozent Gold und 2 Prozent Silber besteht.

7. Vorrichtung nach Anspruch 6, **dadurch gekennzeichnet, dass** das Kupfer gehämmert ist.

8. Vorrichtung nach einem der Ansprüche 5 bis 7, **dadurch gekennzeichnet, dass** sie eine auf den Hals einer Weinflasche oder die Einfüllöffnung eines Weinfasses angepasste Form aufweist.

9. Vorrichtung nach einem der Ansprüche 5 bis 8, **dadurch gekennzeichnet, dass** sie einen elektronischen Schaltkreis umfasst, der die Messung einer vorherbestimmten Einweichzeit sicherstellt, so dass ein präziser und kalibrierter Alterungsvorgang erzielt wird.

10. Vorrichtung nach Anspruch 5, **dadurch gekennzeichnet, dass** sie ein Gerät zur Messung der Eignung zur Alterung eines Weins umfasst, die ein Halteelement (1), das in der Oxidationsebene neutral ist, und ein Element (2), das eine Kontaktfläche und ein vorherbestimmtes Redoxreaktionsvermögen aufweist, umfasst, so dass ein beherrschter beschleunigter Alterungsvorgang erzielt wird, **dadurch gekennzeichnet, dass** das Oxidationselement (2) aus einer Legierung besteht, die sich aus 60 bis 99,9 Prozent Kupfer, 0,05 bis 20 Prozent Silber und 0,05 bis 20 Prozent Gold zusammensetzt.

11. Vorrichtung nach Anspruch 10, **dadurch gekennzeichnet, dass** das Oxidationselement (2) aus 95 Prozent Kupfer, 3 Prozent Gold und 2 Prozent Silber besteht.
